# EUROPEAN PATENT SPECIFICATION

(11) **EP 4 708 652 B1**
(45) Date of publication and mention of the grant of the patent: **02.09.2026**
(21) Application number: 25197008.3
(22) Date of filing: 20.08.2025
(51) Int. Cl.: H02K 37/16

(54) **STEPPING MOTOR AND TIMEPIECE**
SCHRITTMOTOR UND UHR
MOTEUR PAS À PAS ET PIÈCE D'HORLOGERIE

(30) Priority: 06.09.2024 JP 2024153590
(43) Date of publication of application: 11.03.2026
(73) Proprietor: Casio Computer Co., Ltd., Tokyo 151-8543 (JP)
(72) Inventor: Saito, Yuta, 205-8555 Hamura-shi, Tokyo (JP)
(74) Representative: Grünecker Patent- und Rechtsanwälte PartG mbB

(56) References cited:
- US-A1- 2017 279 395

## Description

### TECHNICAL FIELD

The present disclosure relates to a stepping motor and a timepiece.

### DESCRIPTION OF RELATED ART

Stepping motors have step angles required for different applications. For example, when a stepping motor is used as a motor to move the hands of a timepiece, it is necessary to operate the motor in predetermined steps. In this regard, it is conventionally known to provide one magnetic flux saturation section and two recesses (slits) in a stator in a two-coil step motor (see JP 2016-152636 A). A stepping motor according to the preamble of claim 1 is disclosed in US 2017/279395 A1.

### SUMMARY OF THE INVENTION

However, in the case of a triple coil motor with three coils, for example, if the rotor is caused to rotate intermittently and at equal intervals in predetermined steps to move the hands of the timepiece, the magnetic pole will stop stably when the magnetic pole of the rotor faces the central yoke, but when the magnetic pole faces the second and third yokes on both sides, the distribution of the index torque tends to become unstable and it may be difficult to make the magnetic pole stop at predetermined positions. This is thought to be due to the fact that the magnetic flux tries to circularly flow in the shortest path.

The present disclosure is made in view of the above circumstances, and is intended to provide a triple coil stepping motor and a timepiece capable of making the rotor stop at a predetermined position with high accuracy in a minimum mounting space.

In order to solve the above-mentioned problem, the stepping motor according to an aspect of the present disclosure is a stepping motor (100) comprising:
a rotor (3) magnetized in a radial direction;
a stator (1) having a straight section (12) extending in a first direction (L), an overhanging section (14) provided on at least one end side of the straight section and overhanging in a direction intersecting an extending direction of the straight section, and a rotor receptacle (20) provided in the overhanging section to receive the rotor;
two yokes (5) located along a longitudinal direction of the straight section on both sides of the straight section respectively; and
a plurality of coils (C1 to C3) magnetically coupled to the stator, wherein
the overhanging section has first notches (142) provided at least on both sides across the rotor and second notches (145) extending further toward an end side in the first direction of the stator than the first notches.

According to the present disclosure, the effect is that the rotor can be made stop at a predetermined position with high accuracy in a minimum mounting space.

### BRIEF DESCRIPTION OF DRAWINGS

FIG. 1 is a plan view of a stepping motor of an embodiment.
FIG. 2 is a diagram of the stepping motor of the embodiment.
FIG. 3 is a main-part cross-sectional view of the stepping motor along the III-III line in FIG. 1.
FIG. 4A is a plan view of a stator.
FIG. 4B is a side view of the stator from the direction of arrow b in FIG. 4A.
FIG. 4C is a plan view of a coil and a coil board mounted on the stator.
FIG. 4D is a front view of the stator from the direction of arrow d in FIG. 4C.
FIG. 5A is a plan view of a first side yoke and a second side yoke.
FIG. 5B is a plan view of the first side yoke and the second side yoke with coils and coil boards mounted.
FIG. 5C is a front view of the first side yoke and the second side yoke from the direction of arrow c in FIG. 5B.
FIG. 6 is a plan view for explaining a second notch formed in a second overhanging section of the embodiment and a flow of a magnetic flux from a rotor.
FIG. 7 is a plan view for explaining a notch formed in a conventional second overhanging section and the flow of the magnetic flux from the rotor.

### DETAILED DESCRIPTION

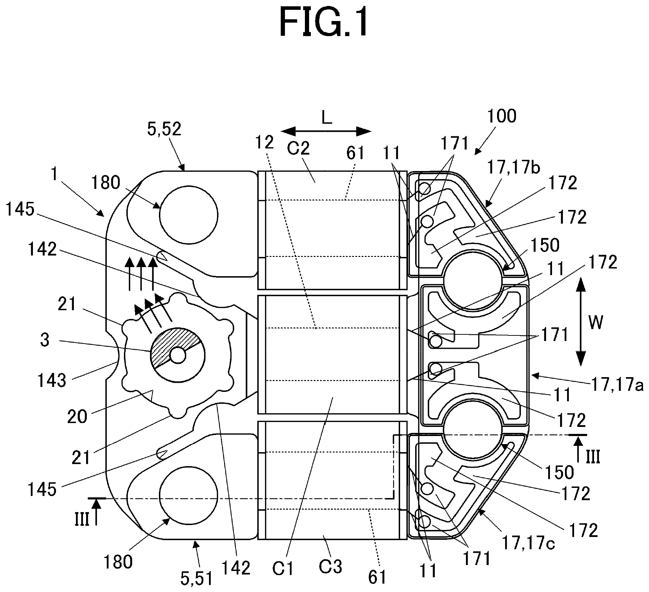

With reference to FIGS. 1 through 7, an embodiment of the stepping motor of the present disclosure will be described. The stepping motor according to the present embodiment is a small motor that is applied to drive, for example, a hand movement mechanism that operates hands of a time display device such as a wristwatch, or a date mechanism. The embodiment described below is subject to various technically preferred limitations in order to implement the present disclosure, but the scope of the present disclosure is not limited to the following embodiment and illustrated examples.

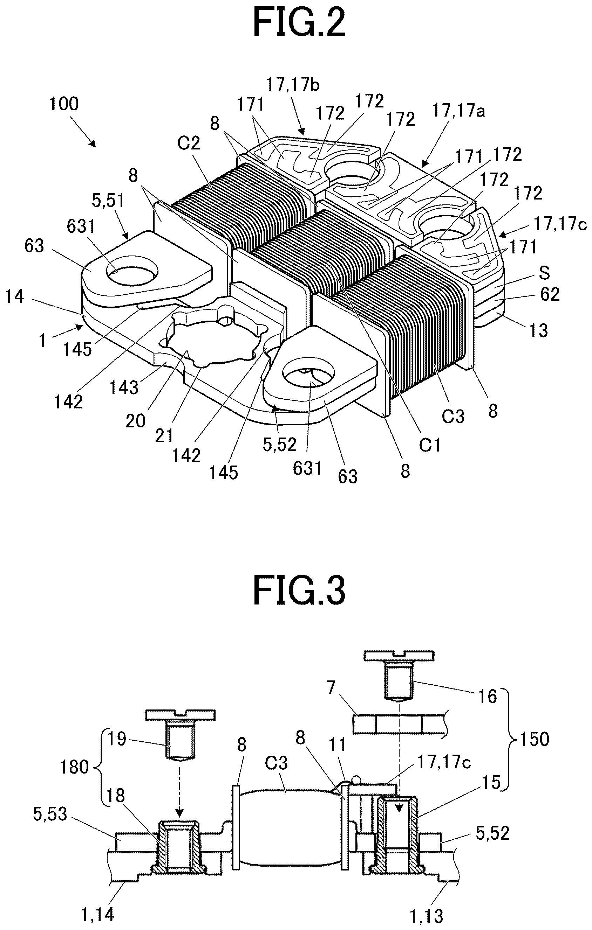

As shown in FIGS. 1 and 2, a stepping motor 100 includes a stator 1, a rotor 3, two yokes 5 (first side yoke 51 and second side yoke 52 described below), and three coils magnetically coupled to the stator 1 (first coil C1, second coil C2, and third coil C3). As described below, in the embodiment, of the three coils, the first coil C1 is a stator-integrated coil formed in a straight section 12 of the stator 1. The second coil C2 and the third coil C3 are formed on the yokes 5 (first side yoke 51 and second side yoke 52), respectively, which are fastened to the stator 1. Thus, the stepping motor 100 in the embodiment is a triple coil motor with three coils.

The rotor 3 is a magnet with two poles magnetized in the radial direction. For example, FIG. 1 shows that the poles are different in the white and shaded hatched portions in the rotor 3. The boundary between the S and N poles is defined as the "polarization position". In the embodiment, the rotor 3 is formed substantially as a disk, and a rotary spindle, not shown, is attached to the circular center of the rotor 3. Permanent magnets such as rare earth magnets (for example, samarium cobalt magnets) are suitable as magnets applied to the rotor 3, but the types of magnets applicable as the rotor 3 are not limited to these. The rotor 3 is received in the rotor receptacle 20 of the stator 1, described below, and is rotatable around the rotary spindle. In the embodiment, the rotor 3 can rotate in either forward (that is, clockwise) or reverse (that is, counterclockwise) direction at a predetermined step angle (60 degrees in the embodiment) within the rotor receptacle 20 by sequential application of driving pulses to any one of the three coils (first coil C1, second coil C2, third coil C3) described below. A gear, and the like, not shown in the figures, which constitutes a wheel train mechanism for moving hands of a time display device (for example, timepiece) such as a wristwatch, is connected to the rotary spindle, and rotation of the rotor 3 rotates the gear, and the like. The rotor in the stepping motor 100 is not limited to a magnet with two poles magnetized in the radial direction. Magnets with more poles than two, such as six poles, for example, may be magnetized in the radial direction.

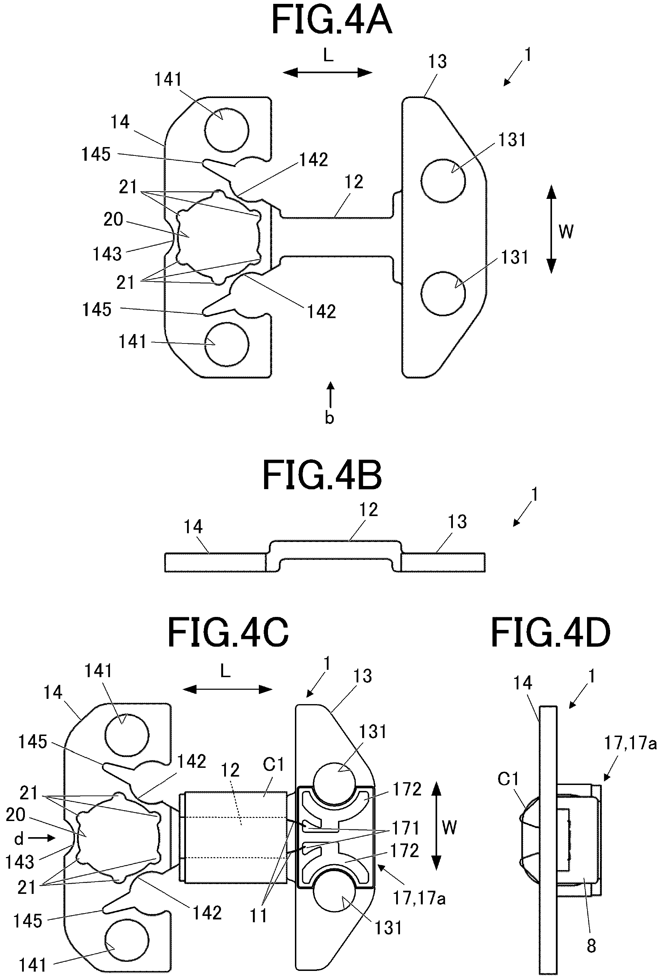

In the embodiment, the stator 1 has a straight section 12 extending in a first direction (hereinafter referred to as the longitudinal direction L) and an overhanging section(s) provided on at least one end side of the straight section 12 and hanging in a direction that intersects the direction of extension of the straight section 12 (longitudinal direction L). In the embodiment, the overhanging sections are a first overhanging section 13 and a second overhanging section 14 provided on both end sides of the longitudinal direction L of the straight section 12, respectively. In FIGS. 4A and 4B, the overhanging section at the right end of the straight section 12 is designated as the first overhanging section 13, and the overhanging section at the left end of the straight section 12 is designated as the second overhanging section 14. The first overhanging section 13 and the second overhanging section 14 overhang in a direction that intersects the longitudinal direction L of the straight section 12. One end of the overhanging sections (first overhanging section 13 and second overhanging section 14) is formed in a straight line extending in a direction orthogonal to the straight section. That is, the overhanging sections (first overhanging section 13 and second overhanging section 14) extend in a direction orthogonal to the straight section 12, and in the embodiment, the "direction intersecting the longitudinal direction L of the straight section 12" is a direction orthogonal to the longitudinal direction L. The overhanging direction of the first overhanging section 13 and the second overhanging section 14 in the embodiment is referred to as the width direction W in FIG. 4A, and the like. The first overhanging section 13 and the second overhanging section 14 overhang from both end sides of the straight section 12 to the left and right in the width direction W (up and down in FIG. 4A) by substantially the same length, so that the stator 1 in the embodiment is substantially H-shaped overall, as shown in FIG. 4A.

The stator 1 is made of a high permeability material such as Permalloy, for example. The straight section 12 constitutes the center yoke in the stepping motor 100. In the embodiment, as shown in FIG. 4B, the straight section 12 is higher in the thickness direction than the first overhanging section 13 and the second overhanging section 14 in the side view, and coil frames 8 of the coil case are installed between the straight section 12 and the first overhanging section 13 and between the straight section 12 and the second overhanging section 14, respectively (see FIGS. 2 and 3, and the like). Then, by winding between this pair of coil frames 8, the first coil C1 is formed on the straight section 12. As shown in FIGS. 4A and 4C, two screw holes 131 are formed at substantially symmetrical positions in the width direction W of the first overhanging section 13. In each of the screw holes 131, a pillar 15 for screw fastening, which will be described later, is inserted from one side (bottom side in FIG. 3), and a screw 16 is inserted into the pillar 15 from the other side (top side in FIG. 3). In the embodiment, the pillar 15 and screw 16 constitute a first support member 150. As shown in FIG. 3, the first support member 150 is inserted substantially perpendicular to the main surface of the first overhanging section 13.

On the first overhanging section 13 and on the straight section 12 side, a first coil board 17a (see FIGS. 1 and 4C) is placed with substantially semicircular notches along the screw holes 131 to avoid the two screw holes 131. The first coil board 17a has a pair of connection points 171 to which wire ends 11 of the first coil C1 are connected. In the embodiment, as shown in FIGS. 1 and 2, three coil boards 17 (first coil board 17a and second and third coil boards 17b and 17c, described below) corresponding to the three coils (first coil C1, second coil C2, third coil C3) are placed on the first overhanging section 13. Each coil board 17 is placed on the first overhanging section 13 via a spacer S that adjusts the height of each, so that the top surfaces of all three coil boards 17 are substantially flush with each other. This allows all three coil boards 17 to conduct with a main board 7, described below, when the main board 7 is placed over the coil boards 17.

If the wire ends 11 hit the end surface of the coil board 17 (first coil board 17a, second coil board 17b, third coil board 17c), there is a risk of wire breakage. For this reason, in the embodiment, the coil frame 8 of the coil case is provided to the same height as the top surface of the coil board 17 (first coil board 17a, second coil board 17b, third coil board 17c), and the wire ends 11 are connected to the connection points 171 of the coil board 17 from above in a mountainous direction so as to go over this coil frame 8. Although FIG. 3 illustrates the case where the third coil C3 connects to the connection point 171 of the third coil board 17c as an example, this configuration is the common configuration for the cases where the three coils (first coil C1, second coil C2, third coil C3) are connected to the connection points 171 of the respective coil boards 17 (first coil board 17a, second coil board 17b, third coil board 17c). This prevents wire breakage. Furthermore, in the embodiment, the wire ends 11 are more securely protected by providing wire bonding sections 110, not shown, which cover the wire ends 11 connected to the connection points 171 with resin bonding materials.

As shown in FIGS. 4A and 4C, two screw holes 141 are formed at substantially symmetrical positions in the width direction W of the second overhanging section 14. In each of the screw holes 141, a pillar 18 for screw fastening, described below, is inserted from one side (bottom side in FIG. 3), and a screw 19 is inserted into the pillar 18 from the other side (top side in FIG. 3). In the embodiment, the pillar 18 and screw 19 constitute a second support member 180. As shown in FIG. 3, the second support member 180 is inserted substantially perpendicular to the main surface of the second overhanging section 14.

At the substantial center of the second overhanging section 14 in the width direction W, which is the position serving as the intersection of the straight section 12 of the stator 1, the first side yoke 51 and the second side yoke 52 described below in the assembled state of the stepping motor 100, a rotor receptacle 20, which is a substantial circular hole portion and in which the rotor 3 is received, is formed. The rotor receptacle 20 in the embodiment is provided with recesses 21 (notches) opening toward the rotor 3 at substantially equal intervals along the circumference of the rotor 3. The recesses 21 keep the stopping state of the rotor 3, and in the embodiment, six recesses 21 are formed on the inner circumference of the rotor receptacle 20 of the stator 1. The rotor 3 has the highest index torque (holding torque) when any of the recesses 21 and the polarization position of the rotor 3 are opposite each other. Therefore, in the deenergized state when no drive pulse is applied, the rotor 3 stops at a position where any of the recesses 21 and the polarization position of the rotor 3 are opposite each other, as shown in FIG. 1.

As shown in FIGS. 4A and 4C, the edge opposite the first overhanging section 13 (edge proximal to the first overhanging section 13) in the second overhanging section 14 is provided with first notches 142 at respective positions corresponding to between two recesses 21 on the end sides in the width direction W among the recesses 21 in the rotor receptacle 20. The first notches 142 are provided on both sides across the rotor 3 (rotor receptacle 20 that receives the rotor 3), and each first notch 142 is formed to bite toward between the two recesses 21. Furthermore, a third notch 143 is formed on an edge on the end side in the longitudinal direction L of the stator 1, that is, an edge distal to the first overhanging section 13 and substantially parallel to the edge where the first notches 142 are provided in the second overhanging section 14 in the embodiment. The third notch 143 is formed at a position corresponding to between the two recesses 21 on the end side in the longitudinal direction L, so that it bites toward between the two recesses 21.

The first notches 142 and the third notch 143 are arranged to surround the rotor 3 from three directions, and the shape around the rotor receptacle 20 of the rotor 3 surrounded by the first notch 142 and the third notch 143 is a substantial equilateral triangle. At the locations where the first notch 142 and the third notch 143 are provided, the width from the edge of the rotor receptacle 20 to the outer edge of the second overhanging section 14 is narrower. In such narrow portions, magnetic saturation is more likely to occur and magnetic resistance is higher than in other portions, thus hindering the passage of the magnetic flux. Thereby, in the embodiment, the first notches 142 and the third notch 143 function as a magnetic flux regulating section that regulates the direction of the magnetic flux so that the magnetic flux from the rotor 3 is oriented by each substantial 120 degrees. The second overhanging section 14 has second notches 145 extending further toward the end side in the longitudinal direction L (first direction) of the stator 1 than the first notches 142. The shape, location and range of the second notch 145 are not limited to the illustrated example. The details of the second notch 145 in the stepping motor 100 of the embodiment are described below.

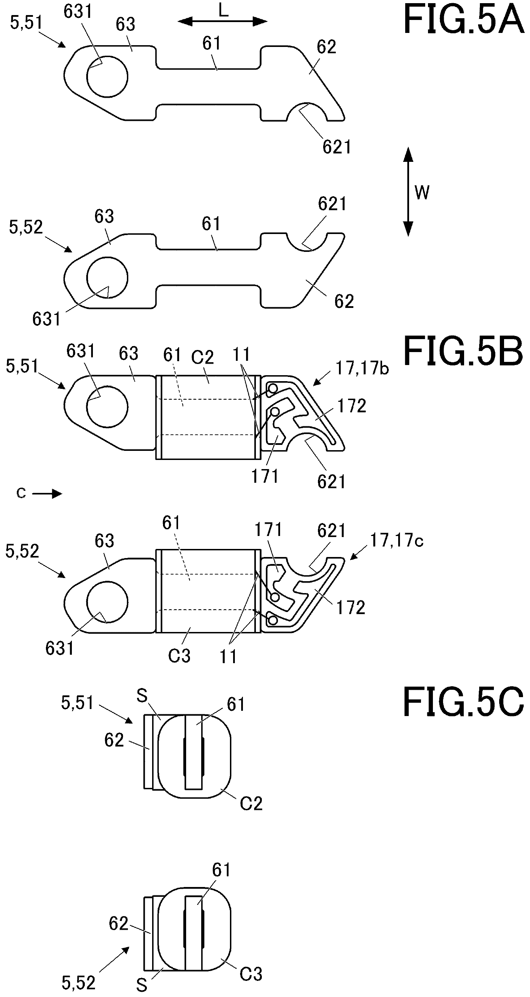

In the embodiment, the two yokes 5 (first side yoke 51 and second side yoke 52) provided in the stepping motor 100 are respectively located along the longitudinal direction L of the straight section 12 on both sides of the straight section 12 as shown in FIGS. 1 and 2, and the like. The first side yoke 51 and the second side yoke 52 substantially form an inverted shape left and right (up and down in FIG. 5A, and the like) with the straight section 12 as the center, and since the basic configuration is the same, they are each simply referred to as a yoke 5 when no distinction is made. In the embodiment, the yoke 5 is made of a high permeability material such as Permalloy, for example. The two yokes 5 each have a straight section 61, an overhanging section 62 located at one end side of the straight section 61 and wider than the straight section 61, and an overhanging section 63 located at the other end side of the straight section 61 and wider than the straight section 61.

The coil frame 8 of the coil case is installed between the straight section 61 and the overhanging section 62 and between the straight section 61 and the overhanging section 63 in each yoke 5 (see FIGS. 2 and 3). As shown in FIG. 2, a second coil C2 is formed by winding between a pair of coil frames 8 in the straight section 61 of the first side yoke 51, which is located on the left side (upper side in FIG. 1, and the like) of the straight section 12 of the stator 1. The same is applied for the second side yoke 52, which is located on the right side (lower side in FIG. 1, and the like) of the straight section 12 of the stator 1. The third coil C3 is formed in the straight section 61 by winding between a pair of coil frames 8 installed in the straight section 61. The two yokes 5 are both fastened at one end side to the first overhanging section 13 via the first support member 150 (see FIGS. 1 and 3) and at the other end side to the second overhanging section 14 via the second support member 180 (see FIGS. 1 and 3).

As shown in FIG. 5B, in the embodiment, the overhanging section 63 of the first side yoke 51 is fastened to one side of the second overhanging section 14 of the stator 1 in the width direction W (upper side in FIG. 1, and the like) via the second support member 180. The overhanging section 63 of the second side yoke 52 is fastened to the other side of the second overhanging section 14 of the stator 1 in the width direction W (lower side in FIG. 1, and the like) via the second support member 180. Specifically, each overhanging section 63 of the yoke 5 is provided with a screw hole 631, and the position of the screw hole 631 corresponds to the position of the screw hole 141 formed in the second overhanging section 14 of the stator 1. The pillar 18 is inserted into the screw holes 141 and 631, and the screw 19 is fastened to the pillar 18, so that the overhanging section 63 of the yoke 5 is fastened to the second overhanging section 14. The overhanging section 62 of the first side yoke 51 is fastened to one side of the first overhanging section 13 of the stator 1 in the width direction W (upper side in FIG. 1, and the like) via the first support member 150. The overhanging section 62 of the second side yoke 51 is fastened to the other side of the first overhanging section 13 of the stator 1 in the width direction W (lower side in FIG. 1, and the like) via the first support member 150. Specifically, the overhanging section 62 of the yoke 5 has a substantially C-shaped notch 621 at a position corresponding to the screw hole 131 formed in the first overhanging section 13 of the stator 1, the pillar 18 is inserted into the screw hole 131 and the notch 621, and the screw 16 is fastened to the pillar 15. Thereby, the overhanging section 62 is fastened to the first overhanging section 13.

A coil board 17 to which the wire ends 11 of the coil are connected is placed on the overhanging section 62 of each yoke **5.** In other words, the second coil board 17b corresponding to the second coil C2 is placed on the overhanging section 62 of the first side yoke 51, and the third coil board 17c corresponding to the third coil C3 is placed on the overhanging section 62 of the second side yoke 52. As in the case of the first coil C1 on the straight section 12 of the stator 1, each coil board 17 (second coil board 17b, third coil board 17c) is placed on the overhanging section 62 via spacer S (see FIGS. 2 and 3). This ensures that the height positions of the three coil boards 17, corresponding to the three coils, are substantially flush, as shown in FIGS. 2 and 3. The overhanging section 62 of each yoke 5 has a substantially semicircular notch 621 along the periphery of the first support member 150 to avoid the first support member 150, which is inserted into the screw holes 131 of the stator 1. The coil boards 17 (second coil board 17b and third coil board 17c) mounted on the overhanging sections 62 also have notches in a shape that roughly matches this notch 621. As shown in FIG. 1, and the like, when the three coil boards 17 are arranged side by side on the first overhanging section 13, the notches in the first coil board 17a and the notches in the second coil board 17b and the third coil board 17c face each other across each first support member 150 to form a substantially circular shape viewed from the top and surround the periphery of the first support member 150.

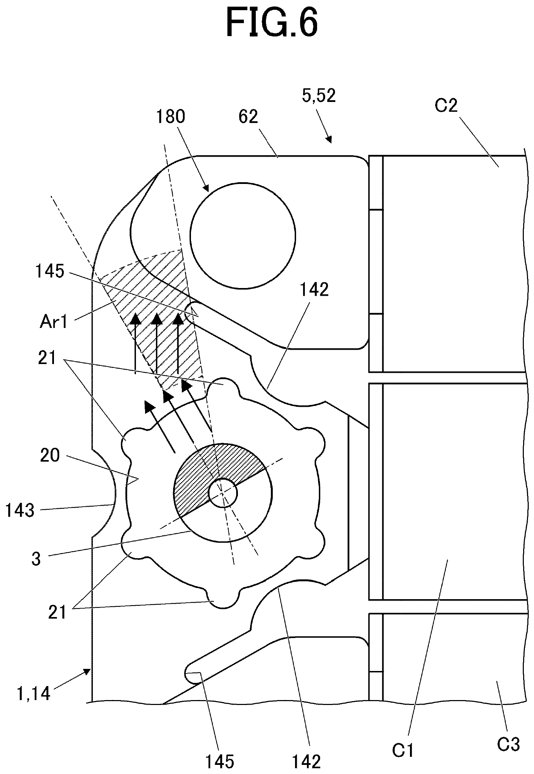

As described above, the stepping motor 100 of the embodiment is a triple coil motor with three coils (first coil C1, second coil C2, and third coil C3). Such triple coil motors are stepping motors that can move hands more smoothly (for example, can achieve sweep hands) when compared to double coil motors with two coils. Referring now to FIG. 6, the second notch 145 formed in the second overhanging section 14 of the stator 1 will be described in detail. In FIG. 6, the flow of the magnetic flux from the rotor 3 is shown schematically by arrows. For example, when the stepping motor is used for a watch hand, it is necessary to make the rotor 3 stop at a stopping position every 60° and move the hand in 60° steps. When a triple coil motor with three coils, such as the stepping motor 100 of the embodiment, is used to make the hand move in 60° steps, it will stop stably if the magnetic pole of the rotor 3 faces toward the central yoke (that is, the center yoke consisting of the straight section 12 of the stator 1).

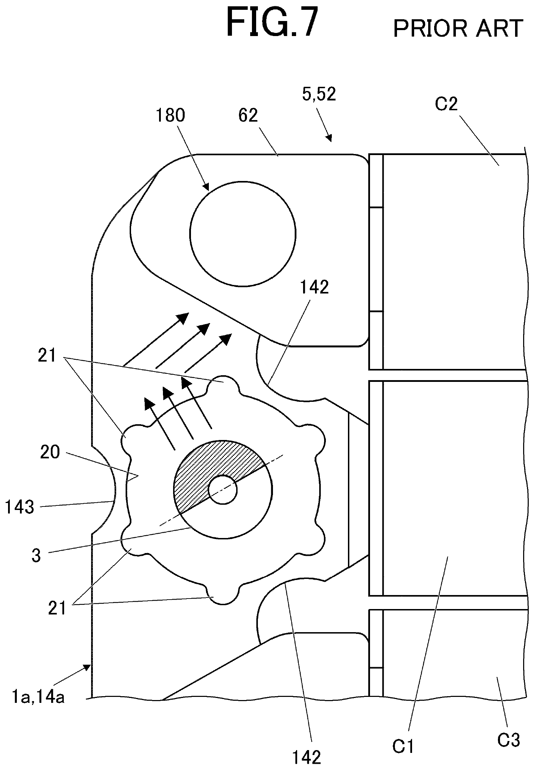

However, the flow of the magnetic flux from the rotor 3 tries to circularly flow in the shortest path. Therefore, if only the first notch 142 is provided around the rotor receptacle 20, as in the conventional configuration shown in FIG. 7, the magnetic flux circularly flows along the inner diameter of the first notch 142 at a steep angle (see arrow in FIG. 7). This results in an unstable index torque distribution when trying to make the magnetic pole of the rotor 3 stop toward the first side yoke 51 and the second side yoke 52. In other words, the direction along the inner diameter of the first notch 142 deviates by about 60° from the angle at which the rotor 3 is to stop toward the first side yoke 51 and the second side yoke 52. This makes it difficult for the first side yoke 51 and the second side yoke 52 to make the rotor 3 stop at a predetermined position. For example, it was difficult to form a stable stopping position every 60°, and in this case, the stepping motor could not be used for accurate movement of the hand every 60°.

In this respect, when a second notch 145 extending further toward the end side in the longitudinal direction L than the end in the longitudinal direction L of the stator 1 in the first notch 142 is formed continuously with the first notch 142, as in the embodiment, the magnetic flux of the rotor 3 circularly flows in a path detouring so as to go around the apex of the second notch 145, as shown by the arrow in FIG. 6. This stabilizes the distribution of index torque and allows the rotor 3 to stop stably at the angle (predetermined position) at which it is desired to stop. The second notch 145 may extend further to the end side in the longitudinal direction L of the stator than the positions shown in FIGS. 4A, 4C and 6. It is preferable that the second notch 145 extends to the end side in the longitudinal direction L when a line is drawn connecting the center of rotation of the rotor 3 and the edge portion of the recess 21 close to the yoke 5 among the plurality of recesses 21 in the rotor receptacle 20, as shown in FIG. 6. For example, the second notch 145 may extend further to the end side in the longitudinal direction L than in the illustrated example. If the notch is cut too far into the end side in the longitudinal direction L, it will be difficult for the magnetic flux to flow. For this reason, it is preferable that the second notch 145 is located within the fan-shaped area Ar1, which is shaded in FIG. 6. From the tip to the base of the second notch 145, it is preferable that there is a portion that does not overlap with each yoke in plan view from above. In other words, if the yoke 5 overlaps with the second notch 145, a path shorter than the route to divert the magnetic flux by providing the second notch 145 is formed, and there is a risk that the magnetic flux may circularly flow using this as the shortest path. Thus, the first side yoke 51 and the second side yoke 52 are connected to the stator 1 at positions farther (outside in the width direction W) than the second notches 145.

Next, the action of the stepping motor 100 in the embodiment will be described. When assembling the stepping motor 100 of the embodiment, the coil frames 8 are attached to the straight section 12 of the stator 1 as shown in FIG. 4A, and winding is applied substantially uniformly between the coil frames 8. This forms the first coil C1 with the straight section 12 as the center yoke. The first coil board 17a is placed on the first overhanging section 13 of the stator 1 via the spacer S. The wire ends 11 drawn from the first coil C1 are connected to the connection points 171 on the first coil board 17a, and wire bonding is applied by resin over the connected portions. This covers and protects the connected portions of the wire ends 11 to the coil board 17 with resin.

The straight section 61 of the first side yoke 51 is also fitted with coil frames 8 and winding is applied substantially uniformly between the coil frames 8. This forms the second coil C2 on the straight section 61. The second coil board 17b is placed on the overhanging section 62 of the first side yoke 51 via the spacer S. The wire ends 11 drawn from the second coil C2 are connected to the connection points 171 on the second coil board 17b, and wire bonding is applied by resin over the connected portions. This covers and protects the connected portions of the wire ends 11 to the coil board 17 with resin. Similarly, the straight section 61 of the second side yoke 52 is wound substantially uniformly to form the third coil C3 on the straight section 61. The third coil board 17c is placed on the overhanging section 62 of the second side yoke 52 via the spacer S. The wire ends 11 drawn from the third coil C3 are connected to the connection points 171 on the third coil board 17c, and wire bonding is applied by resin over the connected portions. The three coil boards 17, to which the wires of the three coils are connected respectively, are then placed on the first overhanging section 13 of the stator 1, with their surface heights aligned substantially flush (see FIG. 2).

In this state, the main board 7 is placed on the first overhanging section 13 from above the coil board 17 to conduct the coil board 17 and the main board 7. As shown in FIGS. 2 and 3, each coil board 17 has terminals 172 for conducting with the main board 7 at different points from the connection points 171 where the wire ends 11 are connected. The terminals 172 are provided in two locations on the first coil board 17a, two locations on the second coil board 17b, and two locations on the third coil board 17c. The main board 7 has pads 72 for conduction at positions corresponding to these respective terminals 172. When the main board 7 is placed on the coil board 17 so that the side on the main board 7 on which the pads 72 are formed is facing the coil board 17, the pads 72 on the main board 7 are connected to the corresponding respective terminals 172 on each coil board 17. In this state, the coil board 17 and main board 7 are co-tightened together in the first support member 150 by screwing them with the screw 16 of the first support member 150.

This allows the three coils to be stably fixed around the first support member 150 and assembled into the stator 1, resulting in an effective and efficient stepping motor 100 in terms of area size, structure, and electrical performance. Although not shown in the figure, the main board 7 has an opening at each position corresponding to the wire bonding on the coil board 17 side, and is configured to avoid wire bonding. This allows the terminal 172 on the coil board 17 side and the pad 72 on the main board side to make contact on the surface without rattling and achieve stable conduction, even when the wire bonding portion is raised on the surface of the coil board 17.

In the embodiment, the second notch 145 extending further toward the end side in the longitudinal direction L than the end in the longitudinal direction L of the stator 1 in the first notch 142 is formed continuously with the first notch 142. This allows the magnetic flux of the rotor 3 to circularly flows in a path detouring so as to go around the apex of the second notch 145, as indicated by the arrow in FIG. 6, to make the rotor 3 stop stably at the angle at which it is desired to stop.

As described above, according to the embodiment, a stepping motor 100 includes: a rotor 3 magnetized in a radial direction; a stator 1 having a straight section 12 extending in a longitudinal direction L that is a first direction, a second overhanging section 14 provided on at least one end side of the straight section 12 and overhanging in a direction intersecting an extending direction of the straight section 12, and a rotor receptacle 20 provided in the second overhanging section 14 to receive the rotor 3; two yokes 5 that are respectively located along the longitudinal direction L of the straight section 12 on both sides of the straight section 12; and a plurality of coils (three coils in the embodiment) magnetically coupled to the stator 1. The second overhanging section 14 has first notches 142 provided at least on both sides across the rotor 3 and second notches 145 extending further toward the end side in the longitudinal direction L of the stator 1 than the first notches 142. This allows the magnetic flux of the rotor 3 to circularly flow in a path detouring so as to go around the apex of the second notch 145 and make the rotor 3 stop stably at the angle at which it is desired to stop. Therefore, the rotor 3 can be stopped at a predetermined position with high accuracy in a minimum mounting space, and a stepping motor 100 that is made stop in 60° steps can be realized.

In the embodiment, the rotor receptacle 20 includes recesses 21 at substantially equal intervals along the circumference of the rotor 3, the recesses 21 opening toward the rotor 3, and each of the second notches 145 extends further to the end side in the longitudinal direction L than the line connecting the center of the rotor 3 and the edge portion of a recess 21 among the recesses 21, the recess 21 being close to the yoke 5. The magnetic flux of rotor 3 is most likely to saturate at the edge portion of the recess 21. Therefore, the magnetic flux can be effectively diverted by forming the second notch 145 further to the end side in the longitudinal direction L than the line connecting the edge portion of this recess 21 and the center of the rotor 3.

In the embodiment, from the tip to the base of the second notch 145, there is a portion that does not overlap with each yoke 5 in plan view from above. If the yoke 5 overlaps with the second notch 145, even with the second notch 145, a path shorter than the route originally intended to divert the magnetic flux is formed, and there is a risk that the magnetic flux may circularly flow using this as the shortest path. By having the yoke 5 connected to the stator 1 at a distance from the second notch 145, the magnetic flux can be properly diverted by the second notch 145.

One end of the second overhanging section 14 of the embodiment is formed in a straight line extending in a direction orthogonal to the straight section. This will ensure that the stator is not enlarged to provide a route for the magnetic flux to be diverted. This allows the rotor 3 to stop in 60° steps with high accuracy in a minimum mounting space.

The second overhanging section 14 of the embodiment has a third notch 143 on the end side in the longitudinal direction L of the stator 1. The third notch 143 and the first notches 142 surround the rotor 3 from three directions and regulate the direction of the magnetic flux so that the magnetic flux from the rotor 3 is oriented by each substantial 120 degrees. This effectively regulates the direction of the magnetic flux from the rotor 3 and allows it to stop in 60° steps with high accuracy.

The rotor receptacle 20 of the embodiment includes six recesses 21 at substantially equal intervals along the circumference of the rotor 3, the recesses 21 opening toward the rotor 3. Each of the first notches 142 and the third notch 143 is provided at a position corresponding to between the recesses. This allows the first notches 142 and the third notch 143 to function as a magnetic flux regulating section that regulates the direction of the magnetic flux so that the magnetic flux from the rotor 3 is oriented by each substantial 120 degrees.

In the embodiment, the shape around the rotor receptacle 20 of the rotor 3 surrounded by the third notch 143 and the first notches 142 is a substantial equilateral triangle. This effectively regulates the direction of the magnetic flux from the rotor 3 and allows it to stop in 60° steps with high accuracy.

Although the embodiment of the present disclosure has been described above, it goes without saying that the present disclosure is not limited to such embodiment and can be varied in various ways to the extent that it does not depart from the gist thereof. For example, the shape of the yoke 5 (especially the overhanging section 63) is not limited to the illustrated example. For example, the width direction W may be smaller than in the illustrated example, or a notch or the like may be formed in the portion close to the second notch 145. This makes the yoke 5 (overhanging section 63 of the yoke 5) further away from the second notch 145, preventing the second notch 145 from creating a shorter path than the route that the magnetic flux is to be diverted, and ensuring that the magnetic flux circularly flows to detour the apex of the second notch 145.

In the embodiment, an example is shown in which the apex of the second notch 145 has an R tip. However, the apex may have a pointed tip without R if it does not interfere with the processing to form the second notch 145. The specific shape of the second notch 145 is not limited to the illustrated example.

In the embodiment, the case in which the stepping motor 100 is provided with three coils magnetically coupled to the stator 1 is illustrated, but the number of coils is not limited to three, as long as a plurality of coils are provided. For example, the present disclosure can be applied to a configuration without the first coil C1 formed in the straight section 12 among the three coils shown in the embodiment.

In the embodiment, the case in which the stepping motor 100 is used for timepieces or the like is exemplified, but the devices to which the stepping motor 100 can be applied are not limited to this.

Although some embodiments of the present disclosure have been described above, the scope of the present disclosure is not limited to the embodiments described above, but includes the scope of the disclosure described in the claims and their equivalents.

## Claims

1. A stepping motor (100) comprising:
a rotor (3) magnetized in a radial direction;
a stator (1) having a straight section (12) extending in a first direction (L), an overhanging section (14) provided on at least one end side of the straight section (12) and overhanging in a direction intersecting an extending direction of the straight section (12), and a rotor receptacle (20) provided in the overhanging section (14) to receive the rotor;
two yokes (5) located along a longitudinal direction of the straight section (12) on both sides of the straight section respectively; and
a plurality of coils (C1 to C3) magnetically coupled to the stator (1), wherein the overhanging section (14) has first notches (142) provided at least on both sides across the rotor (3) and
**characterized in that** the overhanging section (14) has second notches (145) extending further toward an end side in the first direction of the stator than the first notches.

2. The stepping motor according to claim 1, wherein
the rotor receptacle (20) includes recesses (21) at equal intervals along a circumference of the rotor, the recesses opening toward the rotor, and
the second notches (145) further extend to the end side in
the first direction than lines connecting a center of the rotor (3) and edge portions of recesses close to the yokes (5) among the recesses.

3. The stepping motor according to claim 1 or 2, wherein from tips to bases of the second notches (145), there are portions that do not overlap with the respective yokes in plan view from above.

4. The stepping motor according to any one of claims 1 to 3, wherein
one end of the overhanging section (14) is formed in a straight line extending in a direction orthogonal to the straight section (12).

5. The stepping motor according to any one of claims 1 to 4, wherein
the overhanging section (14) has a third notch (143) on the end side in the first direction of the stator (1), and
the third notch (143) and the first notches (142) surround the rotor (3) from three directions and regulate a direction of a magnetic flux so that the magnetic flux from the rotor is oriented by each 120 degrees.

6. The stepping motor according to claim 5, wherein
the rotor receptacle (20) includes six recesses (21) at equal intervals along a circumference of the rotor (3),
the recesses (21) opening toward the rotor, and
each of the first notches (142) and the third notch (143) is provided at a position corresponding to between the recesses.

7. The stepping motor according to claim 5, wherein
a shape around the rotor receptacle (20) of the rotor (3) surrounded by the third notch (143) and the first notches (142) is an equilateral triangle.

8. A timepiece comprising the stepping motor according to any one of claims 1 to 7.

## Patentansprüche

1. Schrittmotor (100), der umfasst:
einen Rotor (3), der in einer radialen Richtung magnetisiert ist;
einen Stator (1), der einen geraden Abschnitt (12), der sich in einer ersten Richtung (L) erstreckt, einen überhängenden Abschnitt (14), der sich an wenigstens einer Endseite des geraden Abschnitts (12) befindet und in einer Richtung überhängt, die eine Richtung schneidet, in der sich der gerade Abschnitt (12) erstreckt, sowie eine Rotoraufnahme (20) aufweist, die sich in dem überhängenden Abschnitt (14) befindet, um den Rotor aufzunehmen;
zwei Joche (5), die jeweils in einer Längsrichtung (12) des geraden Abschnitts (12) an beiden Seiten des geraden Abschnitts angeordnet sind; sowie
eine Vielzahl von Spulen (C1 bis C3),die magnetisch mit dem Stator (1) gekoppelt sind, wobei
der überhängende Abschnitt (14) erste Einkerbungen (142) aufweist, die wenigstens an beiden Seiten und quer zu dem Rotor (3) vorhanden sind, und
**dadurch gekennzeichnet, dass** der überhängende Abschnitt (14) zweite Einkerbungen (145) aufweist, die sich in der ersten Richtung des Stators weiter zu einer Endseite hin erstrecken als die ersten Einkerbungen.

2. Schrittmotor nach Anspruch 1, wobei
die Rotoraufnahme (20) Vertiefungen (21) in gleichmäßigen Abständen entlang eines Umfangs des Rotors aufweist, wobei sich die Vertiefungen zu dem Rotor hin öffnen, und
sich die zweiten Einkerbungen (145) in der ersten Richtung weiter zu der Endseite hin erstrecken als Linien, die eine Mitte des Rotors (3) und Randabschnitte derjenigen Vertiefungen verbinden, die sich von den Vertiefungen nahe an den Jochen befinden.

3. Schrittmotor nach Anspruch 1 oder 2, wobei
von Spitzen bis zu den Basen der zweiten Aussparungen (145) Abschnitte vorhanden sind, die sich, in Draufsicht von oben, nicht mit den jeweiligen Jochen überlappen.

4. Schrittmotor nach einem der Ansprüche 1 bis 3, wobei
ein Ende des überhängenden Abschnitts (14) in einer geraden Linie ausgebildet ist, die sich in einer Richtung im rechten Winkel zu dem geraden Abschnitt (12) erstreckt.

5. Schrittmotor nach einem der Ansprüche 1 bis 4, wobei
der überhängende Abschnitt (14) eine dritte Einkerbung (134) an der Endseite in der ersten Richtung des Stators (1) aufweist, und die dritte Einkerbung (143) sowie die ersten Einkerbungen (142) den Rotor (13) in drei Richtungen umgeben, und eine Richtung eines Magnetflusses so regulieren, dass der Magnetfluss von dem Rotor um jeweils 120° orientiert ist.

6. Schrittmotor nach Anspruch 5, wobei
die Rotoraufnahme (20) sechs Aussparungen (21) in gleichmäßigen Abständen entlang eines Umfangs des Rotors (3 aufweist,
sich die Vertiefungen (21) zu dem Rotor hin öffnen, und
sich jede der ersten Einkerbungen (142) und die dritte Einkerbung (143) an einer Position befinden, die zwischen den Vertiefungen liegt.

7. Schrittmotor nach Anspruch 5, wobei
eine Form um die Rotoraufnahme (20) des Rotors (3) herum, die von der dritten Einkerbung (143) sowie den ersten Einkerbungen (142) umschlossen wird, ein gleichseitiges Dreieck ist.

8. Uhr, die den Schrittmotor nach einem der Ansprüche 1 bis 7 umfasst.

## Revendications

1. Moteur pas à pas (100) comprenant :
un rotor (3) magnétisé dans une direction radiale ;
un stator (1) ayant une partie rectiligne (12) s'étendant dans une première direction (L), une partie en porte-à-faux (14) située sur au moins un côté d'extrémité de la partie rectiligne (12) et en porte-à-faux dans une direction coupant une direction d'extension de la partie rectiligne (12), et un logement de rotor (20) situé dans la partie en porte-à-faux (14) pour recevoir le rotor ;
deux culasses (5) situées respectivement le long d'une direction longitudinale de la partie rectiligne (12) des deux côtés de la partie rectiligne ; et
une pluralité de bobines (C1 à C3) couplées magnétiquement au stator (1),
dans lequel la partie en porte-à-faux comporte des premières encoches (142) situées au moins sur les deux côtés de part et d'autre du rotor (3) et
**caractérisé en ce que** la partie en porte-à-faux (14) comporte des deuxièmes encoches (145) s'étendant plus loin en direction d'un côté d'extrémité dans la première direction du stator que les premières encoches.

2. Moteur pas à pas selon la revendication 1, dans lequel le logement de rotor (20) comporte des évidements (21) à intervalles réguliers le long d'une circonférence du rotor, et
les deuxièmes encoches (145) s'étendent plus loin en direction du côté d'extrémité dans la première direction que des lignes reliant un centre du rotor (3) et des parties de bord d'évidements proches des culasses (5) parmi les évidements.

3. Moteur pas à pas selon la revendication 1 ou 2, dans lequel
des pointes aux bases des deuxièmes encoches (145), **il** existe des parties qui ne chevauchent pas les culasses respectives dans une vue en plan du dessus.

4. Moteur pas à pas selon l'une quelconque des revendications 1 à 3, dans lequel
une extrémité de la partie en porte-à-faux (14) est formée dans une ligne droite s'étendant dans une direction orthogonale à la partie rectiligne (12).

5. Moteur pas à pas selon l'une quelconque des revendications 1 à 4, dans lequel
la partie en porte-à-faux (14) possède une troisième encoche (143) sur le côté d'extrémité dans la première direction du stator (1), et
la troisième encoche (143) et les premières encoches (142) entourent le rotor (3) depuis trois directions et régulent une direction d'un flux magnétique de sorte que le flux magnétique provenant du rotor soit orienté à 120 degrés chacun.

6. Moteur pas à pas selon la revendication 5, dans lequel
le logement de rotor (20) comporte six évidements (21) à intervalles réguliers le long d'une circonférence du rotor (3), les évidements (21) s'ouvrant en direction du rotor, et
chacune des premières encoches (142) et la troisième encoche (143) est située au niveau d'une position correspondante entre des évidements.

7. Moteur pas à pas selon la revendication 5, dans lequel
une forme autour du logement de rotor (20) du rotor (3) entourée par la troisième encoche (143) et les premières encoches (142) est un triangle équilatéral.

8. Pièce d'horlogerie comprenant le moteur pas à pas selon l'une quelconque des revendications 1 à 7.
